# EUROPEAN PATENT APPLICATION

(11) **EP 4 583 436 A1**
(43) Date of publication of application: **09.07.2025**
(21) Application number: 23870425.8
(22) Date of filing: 18.09.2023
(51) Int. Cl.: H04L 1/00

(54) **COMMUNICATION METHOD AND APPARATUS**

(30) Priority: 30.09.2022 CN 202211209168
(71) Applicant: Huawei Technologies Co., Ltd., Shenzhen, Guangdong 518129 (CN)
(72) Inventor: QU, Weilin, Shenzhen, Guangdong 518129 (CN); WU, Yiling, Shenzhen, Guangdong 518129 (CN); JIN, Zhe, Shenzhen, Guangdong 518129 (CN)
(74) Representative: Gill Jennings & Every LLP
(86) International application number: PCT/CN2023/119308
(87) International publication number: WO 2024/067191

(57) **Abstract**

A communication method and apparatus are provided, to achieve optimized transmission with a balanced downlink signal transmission rate and coverage. The network device determines a first signal, determines a length of a modulation symbol of a second signal based on the first signal, and sends the first signal and the second signal to a terminal device, so that the terminal device determines the length of the modulation symbol of the second signal based on the first signal, and demodulates the second signal based on the length of the modulation symbol of the second signal. A length of a modulation symbol of the first signal may be one of a plurality of lengths of modulation symbols. The first signal is a preamble signal or a signal used by the terminal device for synchronization. The second signal is a data signal after the first signal. The modulation symbol of the second signal is an amplitude shift keying modulation symbol or a frequency shift keying modulation symbol. The first signal is associated with the length of the modulation symbol of the second signal, so that a length of a modulation symbol for downlink transmission can be adjusted, to achieve optimized transmission with a balanced downlink signal transmission rate and coverage.

## Description

### CROSS-REFERENCE TO RELATED APPLICATIONS

This application claims priority to Chinese Patent Application No. 202211209168.4, filed with the China National Intellectual Property Administration on September 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With increasingly wide application of new radio (new radio, NR) access technology communication, machine-type communication (machine-type communication, MTC), and internet of things (internet of things, IoT) communication, a quantity of IoT device connections increases day by day. The industry has an increasingly strong demand for reducing costs and power consumption of the IoT device.

In the 4G era, 3GPP introduces a narrow-band IoT (narrow-band IoT, NB-IoT) system. However, an NB-IoT terminal requires an overall external (battery) power supply, and has a capability of generating a local high-frequency local oscillation carrier. Therefore, a terminal device of this type may achieve power consumption at a mere milliwatt level. For a purpose of connectivity of everything of 5G IoT, whether a terminal device can be enabled to passively accept an external radio frequency signal as local energy supply without continuous external energy supply, or whether a terminal device that is powered in a passive or semi-passive manner cooperating with another energy harvesting manner can be enabled to access a 5G network and perform effective communication in the 5G network is a key direction of a current research, and may also be defined as a research direction of passive internet of things or backscatter communication.

Due to limitations of power consumption and complexity of a passive internet of things terminal device or a terminal device that performs backscatter communication, power consumption of a terminal device of this type may be limited to target power consumption of 100 microwatt (µW) or less than 100 µW. Under a limitation of the target power consumption, the terminal device of this type may not have a capability of generating a local high-frequency local oscillation, that is, does not have a capability of generating a local carrier corresponding to a transmitted radio frequency signal. In this case, the terminal device of this type may demodulate a signal in a non-coherent demodulation method. A common non-coherent demodulation method is an envelope detection (envelope detection) manner. However, currently, in downlink transmission, a modulation symbol for which demodulation using envelope detection is enabled may cause a problem of low downlink transmission efficiency.

### SUMMARY

This application provides a communication method and apparatus, to implement optimized transmission with a downlink signal transmission rate and coverage performance that meet a requirement.

According to a first aspect, this application provides a communication method. The method may be applied to a network device, or a functional module, a processor, a chip, or the like in the network device. The method may include: The network device determines a first signal, determines a length of a modulation symbol of a second signal based on the first signal, and sends the first signal and the second signal to a terminal device. A length of a modulation symbol of the first signal may be one of a plurality of lengths of modulation symbols. The first signal is a preamble signal or a signal used by the terminal device for synchronization. The second signal is a data signal after the first signal. The modulation symbol of the second signal is an amplitude shift keying modulation symbol or a frequency shift keying modulation symbol.

According to the foregoing method, the first signal is associated with the length of the modulation symbol of the second signal, so that the length of the modulation symbol for downlink transmission can be adjusted. In this way, the length of the modulation symbol of the downlink signal can be flexibly adjusted, to achieve optimized transmission with a balanced downlink signal transmission rate and coverage.

In a possible design, the plurality of lengths of modulation symbols include a first length of a modulation symbol and a second length of a modulation symbol, and the second length of the modulation symbol is twice the first length of the modulation symbol. In this way, a rate of a downlink signal can be adjusted, and downlink transmission efficiency is improved.

In a possible design, before sending the first signal to the terminal device, the network device determines the length of the modulation symbol of the first signal based on a coverage level of the terminal device. In this way, the network device can determine a length of a modulation symbol that meets the coverage level of the terminal device, to achieve optimized transmission with a balanced downlink signal transmission rate and coverage.

In a possible design, that the network device determines the length of the modulation symbol of the first signal based on a coverage level of the terminal device may include: When the coverage level of the terminal device is greater than a coverage level threshold, the network device may determine that the length of the modulation symbol of the first signal is a third length of a modulation symbol; or when the coverage level of the terminal device is less than or equal to the coverage level threshold, the network device may determine that the length of the modulation symbol of the first signal is a fourth length of a modulation symbol, where the fourth length of the modulation symbol is greater than the third length of the modulation symbol. In this way, an appropriate length of a modulation symbol may be selected based on the coverage level of the terminal device, so that optimized transmission with a balanced downlink signal transmission rate and coverage is achieved while transmission performance of the first signal is ensured.

In a possible design, the length of the modulation symbol of the second signal may be the same as the length of the modulation symbol of the first signal. In this way, after determining the length of the modulation symbol of the first signal, the terminal device does not need to re-determine the length of the modulation symbol of the second signal, and can demodulate the data signal (namely, the second signal) by using the same length of the modulation symbol. This helps reduce complexity of demodulating a data signal by the terminal device and reduce design overheads and complexity of the first signal.

In a possible design, the first signal may indicate the length of the modulation symbol of the second signal. In this way, the length of the modulation symbol of the second signal can be flexibly adjusted, thereby ensuring a balance between transmission performance of the second signal and a transmission rate.

In a possible design, that the first signal indicates the length of the modulation symbol of the second signal may include: The first signal may carry first indication information, the first indication information may include a first modulation and coding scheme (modulation and coding scheme, MCS) index, and the first MCS index may indicate the length of the modulation symbol of the second signal, or the first MCS index may indicate the length of the modulation symbol of the second signal and one or more of the following: a line code rate, a spreading code rate, or a channel coding code rate associated with the length of the modulation symbol of the second signal. In this way, the length of the modulation symbol of the second signal can be dynamically determined based on indication of the first signal. In addition, in a joint indication manner combining the coding code rate and a repetition number, downlink transmission manners of the terminal device in different coverage can be more effectively, dynamically, and flexibly adjusted, to achieve optimized transmission with a balanced downlink signal transmission rate and coverage.

In a possible design, that the first signal indicates the length of the modulation symbol of the second signal may include: the first signal may carry a first sequence, and one of the following information of the first sequence indicates the length of the modulation symbol of the second signal: a first length of the sequence, a type of the first sequence, a mask superimposed on the first sequence, or a repetition number of a second sequence that is included in the first sequence, where the second sequence is a subsequence of the first sequence. In this way, the first signal directly indicates the modulation symbol of the second signal, so that the length of the modulation symbol of the second signal can be flexibly indicated, and a signal frame structure design for downlink transmission is simplified.

In a possible design, that the network device determines a length of a modulation symbol of a second signal based on the first signal may be as follows: The network device determines a length of a modulation symbol of a third signal based on the first signal, where the length of the modulation symbol of the third signal may be the same as the length of the modulation symbol of the first signal, the third signal may indicate the length of the modulation symbol of the second signal, the third signal is a downlink signal after the first signal, and the third signal is a downlink signal before the second signal; and the third signal is a signal that carries downlink control information (downlink control information, DCI), or the third signal is a specific signal that indicates the length of the modulation symbol of the second signal, or the third signal is a specific signal that indicates an MCS of the second signal. The network device may further send the third signal to the terminal device. In this way, the network device can dynamically adjust a length of a modulation symbol of the sent data signal, to achieve optimized transmission with a balanced downlink signal transmission rate and coverage.

In a possible design, that the third signal indicates the length of the modulation symbol of the second signal may include: The third signal may carry second indication information, the second indication information includes a second MCS index, and the second MCS index indicates the length of the modulation symbol of the second signal, or the second MCS index indicates the length of the modulation symbol of the second signal and one or more of the following: a line code rate, a spreading code rate, or a channel coding code rate associated with the length of the modulation symbol of the second signal. In this way, when the third signal indicates the length of the modulation symbol of the second signal, in a joint indication manner combining the coding code rate and a repetition number, network overheads for sending the first signal and design complexity of the first signal can be effectively reduced, thereby reducing complexity and power consumption of detecting the first signal by the terminal device. In addition, the third signal separately indicates modulation and coding information of the second signal, so that with simple design complexity, more bits may be carried to effectively, dynamically, and flexibly adjust downlink transmission manners of the terminal device in different coverage, to achieve optimized transmission with a balanced downlink signal transmission rate and coverage.

In a possible design, the network device may further send a first message to the terminal device, where the first message may indicate a length of a modulation symbol of a downlink signal after the first signal, and the first message may be further used to carry one of a paging message, a group paging message, or a message 2 or a message 4 in a random access procedure. Because the paging message, the message 2, the message 4, or the like already has prior information about the coverage level of the terminal device, the coverage level of the terminal device is stable in short time. Semi-static indication may be used with reference to a coverage capability of the terminal device to indicate all subsequent signals to use a same length of a modulation symbol, thereby reducing signaling overheads of frequently dynamically indicating the length of the modulation symbol.

According to a second aspect, this application provides a communication method. The method may be applied to a terminal device, or a functional module, a processor, a chip, or the like in the terminal device. The method may include: The terminal device receives a first signal and a second signal from a network device, and determines a length of a modulation symbol of the second signal based on the first signal; and demodulates the second signal based on the length of the modulation symbol of the second signal. A length of a modulation symbol of the first signal may be one of a plurality of lengths of modulation symbols. The first signal is a preamble signal or a signal used by the terminal device for synchronization. The second signal is a data signal after the first signal. The modulation symbol of the second signal is an amplitude shift keying modulation symbol or a frequency shift keying modulation symbol.

According to the foregoing method, the first signal is associated with the length of the modulation symbol of the second signal, so that the length of the modulation symbol for downlink transmission can be adjusted. In this way, the length of the modulation symbol of the downlink signal can be flexibly adjusted, to achieve optimized transmission with a balanced downlink signal transmission rate and coverage.

In a possible design, the plurality of lengths of modulation symbols may include a first length of a modulation symbol and a second length of a modulation symbol, and the second length of the modulation symbol may be twice the first length of the modulation symbol. In this way, a rate of a downlink signal can be adjusted, and downlink transmission efficiency is improved.

In a possible design, the length of the modulation symbol of the second signal may be the same as the length of the modulation symbol of the first signal. In this way, after determining the length of the modulation symbol of the first signal, the terminal device does not need to re-determine the length of the modulation symbol of the second signal, and can demodulate the data signal (namely, the second signal) by using the same length of the modulation symbol. This helps reduce complexity of demodulating the data signal by the terminal device and reduce design overheads and complexity of the first signal.

In a possible design, the first signal may indicate the length of the modulation symbol of the second signal. In this way, the length of the modulation symbol of the second signal can be dynamically adjusted, thereby ensuring a balance between transmission performance of the second signal and a transmission rate.

In a possible design, that the first signal indicates the length of the modulation symbol of the second signal may include: The first signal may carry first indication information, the first indication information may include a first MCS index, and the first MCS index may indicate the length of the modulation symbol of the second signal, or the first MCS index indicates the length of the modulation symbol of the second signal and one or more of the following: a line code rate, a spreading code rate, or a channel coding code rate associated with the length of the modulation symbol of the second signal. In this way, the length of the modulation symbol of the second signal can be dynamically determined based on indication of the first signal. In addition, in a joint indication manner combining the coding code rate and a repetition number, downlink transmission manners of the terminal device in different coverage can be more effectively, dynamically, and flexibly adjusted, to achieve optimized transmission with a balanced downlink signal transmission rate and coverage.

In a possible design, that the first signal indicates the length of the modulation symbol of the second signal may include: The first signal may carry a first sequence, and one of the following information of the first sequence may indicate the length of the modulation symbol of the second signal: a first length of the sequence, a type of the first sequence, a mask superimposed on the first sequence, or a repetition number of a second sequence that is included in the first sequence, where the second sequence is a subsequence of the first sequence. In this way, the first signal directly indicates the modulation symbol of the second signal, so that the length of the modulation symbol of the second signal can be flexibly indicated, and a signal frame structure design for downlink transmission is simplified.

In a possible design, that the terminal device determines a length of a modulation symbol of the second signal based on the first signal may be as follows: The terminal device may receive a third signal from the network device based on the first signal, where a length of a modulation symbol of the third signal may be the same as the length of the modulation symbol of the first signal, the third signal indicates the length of the modulation symbol of the second signal, the third signal is a downlink signal after the first signal, and the third signal is a downlink signal before the second signal; and the third signal is a signal that carries DCI or the third signal is a specific signal that indicates the length of the modulation symbol of the second signal. In this way, the network device can dynamically adjust the length of the modulation symbol of the sent data signal, to achieve optimized transmission with a balanced downlink signal transmission rate and coverage.

In a possible design, that the third signal indicates the length of the modulation symbol of the second signal may include: The third signal may carry second indication information, the second indication information includes a second MCS index, and the second MCS index indicates the length of the modulation symbol of the second signal, or the second MCS index indicates the length of the modulation symbol of the second signal and one or more of the following: a line code rate, a spreading code rate, or a channel coding code rate associated with the length of the modulation symbol of the second signal. In this way, when the third signal indicates the length of the modulation symbol of the second signal, in a joint indication manner combining the coding code rate and a repetition number, network overheads for sending the first signal and design complexity of the first signal can be effectively reduced, thereby reducing complexity and power consumption of detecting the first signal by the terminal device. In addition, the third signal separately indicates modulation and coding information of the second signal, so that with simple design complexity, more bits may be carried to effectively, dynamically, and flexibly adjust downlink transmission manners of the terminal device in different coverage, to achieve optimized transmission with a balanced downlink signal transmission rate and coverage.

In a possible design, the terminal device may further receive a first message from the network device, where the first message may indicate a length of a modulation symbol of a downlink signal after the first signal, and the first message is further used to carry one of a paging message, a group paging message, or a message 2 or a message 4 in a random access procedure. Because the paging message, the message 2, the message 4, or the like already has prior information about a coverage level of the terminal device, the coverage level of the terminal device is stable in short time. Semi-static indication may be used with reference to a coverage capability of the terminal device to indicate all subsequent signals to use a same length of a modulation symbol, thereby reducing signaling overheads of frequently dynamically indicating the length of the modulation symbol.

According to a third aspect, this application provides a communication method. The method may be applied to a network device or a functional module, a processor, a chip, or the like in the network device. The method may include: The network device determines a first message, and sends the first message to a terminal device, where the first message may indicate a length of a modulation symbol of a downlink signal after the first message. The first message may be further used to carry one of a paging message, a group paging message, a UE-specific message, or a message 2 or a message 4 in a random access procedure.

According to the foregoing method, the first message may indicate all subsequent downlink signals to use a same length of a modulation symbol, so that signaling overheads for dynamically indicating the length of the modulation symbol can be reduced.

According to a fourth aspect, this application provides a communication method. The method may be applied to a terminal device, or a functional module, a processor, a chip, or the like in the terminal device. The method may include: The terminal device receives a first message from a network device, where the first message may indicate a length of a modulation symbol of a downlink signal after the first message. Further, the terminal device may determine, based on the first message, the length of the modulation symbol of the downlink signal after the first message. The first message may be further used to carry one of a paging message, a group paging message, a UE-specific message, or a message 2 or a message 4 in a random access procedure.

According to the foregoing method, the first message may indicate all subsequent downlink signals to use a same length of a modulation symbol, so that signaling overheads for dynamically indicating the length of the modulation symbol can be reduced.

According to a fifth aspect, this application further provides a communication apparatus. The communication apparatus may be a network device, and the communication apparatus has a function of implementing the method in the first aspect or the possible design examples of the first aspect, or the method in the third aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. The units may perform corresponding functions in the first aspect or the possible design examples of the first aspect, or the third aspect. For details, refer to detailed descriptions in the method examples. Details are not described herein again.

In a possible design, the structure of the communication apparatus includes a transceiver and a processor. Optionally, the communication apparatus further includes a memory. The transceiver is configured to: receive and send a signal or data, and communicate and interact with another device in a communication system. The processor is configured to support the communication apparatus in performing a corresponding function in the first aspect or the possible design examples of the first aspect, or the third aspect. The memory is coupled to the processor, and the memory stores program instructions and data that are necessary for the communication apparatus.

According to a sixth aspect, this application further provides a communication apparatus. The communication apparatus may be a terminal device, and the communication apparatus has a function of implementing the method in the second aspect or the possible design examples of the second aspect, or the fourth aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. The units may perform corresponding functions in the second aspect or the possible design examples of the second aspect, or the fourth aspect. For details, refer to detailed descriptions in the method examples. Details are not described herein again.

In a possible design, the structure of the communication apparatus includes a transceiver and a processor. Optionally, the communication apparatus further includes a memory. The transceiver is configured to: receive and send a signal or data, and communicate and interact with another device in a communication system. The processor is configured to support the communication apparatus in performing a corresponding function in the second aspect or the possible design examples of the second aspect, or the fourth aspect. The memory is coupled to the processor, and the memory stores program instructions and data that are necessary for the communication apparatus.

According to a seventh aspect, an embodiment of this application provides a communication system, where the communication system may include the network device in the first aspect or the third aspect, the terminal device in the second aspect or the fourth aspect, and the like.

According to an eighth aspect, an embodiment of this application provides a computer-readable storage medium, where the computer-readable storage medium stores program instructions, and when the program instructions are run on a computer, the computer is enabled to perform the method according to the first aspect and any possible design of the first aspect, or the second aspect and any possible design of the second aspect, or the third aspect, or the fourth aspect of embodiments of this application. For example, the computer-readable storage medium may be any usable medium that can be accessed by the computer. By way of an example but not a limitation, the computer-readable medium may include a non-transitory computer-readable medium, a random-access memory (random-access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a ninth aspect, an embodiment of this application provides a computer program product, including computer program code or instructions. When the computer program code or the instructions are run on a computer, the method according to the first aspect or any possible design of the first aspect, or the second aspect or any possible design of the second aspect, or the third aspect, or the fourth aspect is performed.

According to a tenth aspect, this application further provides a chip, including a processor, where the processor is coupled to a memory, and is configured to read and execute program instructions stored in the memory, so that the chip implements the method in the first aspect or any possible design of the first aspect, or the second aspect and any possible design of the second aspect, or the third aspect, or the fourth aspect.

For each aspect of the fifth aspect to the tenth aspect and technical effects that may be achieved in each aspect, refer to descriptions of technical effects that can be achieved in the first aspect or the possible solutions in the first aspect, or the second aspect or the possible solutions in the second aspect, or the solutions in the third aspect, or the solutions in the fourth aspect. Details are not described herein again.

### BRIEF DESCRIPTION OF DRAWINGS

FIG. 1 is a diagram of an architecture of a communication system according to this application;
FIG. 2 is a schematic flowchart of a communication method according to this application;
FIG. 3 is a diagram of a waveform of a first OOK modulation symbol according to this application;
FIG. 4 is a diagram of a waveform of a second OOK modulation symbol according to this application;
FIG. 5 is a schematic flowchart of another communication method according to this application;
FIG. 6 is a diagram of a structure of a communication apparatus according to this application; and
FIG. 7 is a diagram of a structure of a communication apparatus according to this application.

### DESCRIPTION OF EMBODIMENTS

The following further describes in detail this application with reference to accompanying drawings.

Embodiments of this application provide a communication method and apparatus, to implement optimized transmission with a downlink signal transmission rate and coverage performance that meet a requirement. The method and the apparatus in this application are based on a same technical concept. Because problem-resolving principles of the method and the apparatus are similar, mutual reference may be made to implementations of the apparatus and the method, and repeated descriptions are not described again.

For ease of understanding, the following first explains and describes some terms in embodiments of this application.

### 1. Amplitude shift keying (amplitude shift keying, ASK)

A modulation scheme that uses a baseband digital signal to control an amplitude change of a carrier is referred to as amplitude shift keying modulation, also referred to as digital amplitude modulation. A simplest form is binary amplitude shift keying (2ASK).

For example, 2ASK modulation may be implemented by using a multiplier and a switch circuit. The carrier is on or off under control of a digital signal 1 or 0. When the digital signal is 1, a carrier of an amplitude A is on, and in this case, the carrier of the amplitude A is sent on a transmission channel. When the digital signal is 0, a carrier of an amplitude B is on, and in this case, the carrier of the amplitude B is sent on the transmission channel. Therefore, a receive end may determine whether the digital signal is 1 or 0 based on detection of an amplitude of a carrier.

### 2. On-off keying (On-Off Keying, OOK) modulation

OOK modulation is on-off amplitude shift keying modulation. OOK is a special example of 2ASK modulation.

For example, OOK modulation may be implemented by using a multiplier and a switch circuit. A carrier is on or off under control of a digital signal 1 or 0. When the digital signal is 1, the carrier is on, and in this case, a carrier is sent on a transmission channel. When the digital signal is 0, no carrier is on, and in this case, no carrier is sent on the transmission channel. Therefore, a receive end may determine whether the digital signal is 1 or 0 based on detection of whether a carrier exists.

If OOK modulation is applied to a new radio (new radio, NR) or long term evolution (long term evolution, LTE) system, an OOK modulation symbol with a high amplitude (or envelope, level, or energy) (for example, higher than a threshold, or non-zero) is referred to as an OOK modulation symbol {1}, or an OOK modulation symbol ON (ON), or an OOK modulation symbol on; and an OOK modulation symbol with a low amplitude (or envelope, level, or energy) (for example, lower than a threshold, or zero) is referred to as an OOK modulation symbol {0}, or an OOK modulation symbol OFF (OFF), or an OOK modulation symbol off. Magnitude of an amplitude is defined relative to an amplitude demodulation threshold of a receiver. If the amplitude is greater than the demodulation threshold, the amplitude is high. If the amplitude is less than the demodulation threshold, the amplitude is low.

### 3. Frequency shift keying (frequency shift keying, FSK) modulation

A modulation scheme that uses a baseband digital signal to control a frequency change of a carrier is referred to as frequency shift keying modulation. A simplest form is binary frequency shift keying (2FSK).

For example, in 2FSK modulation, a carrier sends a carrier signal at one of two frequencies under control of a digital signal 1 or 0. In a state in which the digital signal is 1, a carrier of a frequency f1 is connected, and in this case, a carrier is sent on a transmission channel of f1. In a state in which the digital signal is 0, a carrier of a frequency f2 is connected, and in this case, a carrier is sent on a transmission channel of f2. Therefore, a receive end may determine whether the digital signal 1 or 0 is sent by comparing which transmission channel of f1 and f2 has a carrier. For a transmission channel of each frequency, a transmitted baseband digital signal is similar to an OOK modulation signal.

If 2FSK modulation is applied to a new radio (new radio, NR) or a long term evolution (long term evolution, LTE) system, a frequency f1 whose signal amplitude (or envelope, level, or energy) is higher than a signal amplitude (or envelope, level, or energy) of a frequency f2 is referred to as a 2FSK modulation symbol {1}. On the contrary, a frequency f1 whose signal amplitude (or envelope, level, or energy) is lower than a signal amplitude (or envelope, level, or energy) of a frequency f2 is referred to as a 2FSK modulation symbol {0}. A signal amplitude of a single frequency is defined by comparing with that of another frequency. If the signal amplitude of the single frequency is greater than that of another frequency point, the signal amplitude is high. If the signal amplitude of the single frequency is less than that of another frequency point, the signal amplitude is low.

### 4. Coherent demodulation and non-coherent demodulation

A coherent carrier needs to be restored in the coherent demodulation, and an original digital baseband signal is obtained based on a function of the coherent carrier and a modulated signal, where the coherent carrier and a carrier of a digital baseband signal modulated at a transmit end have a same frequency and a same phase.

No coherent carrier needs to be restored in the non-coherent demodulation, and an original digital baseband signal is restored based on an amplitude envelope of a modulated signal.

Therefore, compared with the coherent demodulation, the non-coherent demodulation is simpler, but causes a performance loss.

### 5. Envelope detection (envelope detection)

Envelope detection is a signal detection method in which a high-frequency signal is used as an input signal to obtain an envelope or an amplitude line of a low-frequency original signal through a half-wave or full-wave rectifier circuit. Based on the obtained envelope of the original signal, a receiver performs digital sampling on the envelope of the original signal, compares the envelope with an amplitude or energy threshold set by the receiver, and determines whether a transmitted signal is 1 or 0, that is, whether the signal is on or off (ON/OFF).

### 6. Double-sideband OOK/ASK modulation signal

This type of amplitude modulation is an effective modulation scheme that enables demodulation using envelope detection without a local high-frequency local oscillation. In OOK/ASK, there is one channel of modulation. OOK/2ASK modulation is used as an example. A transmitter modulates a 0/1 information bit into two signal amplitudes, for example, an information bit 0 and an information bit 1 are respectively modulated into a rectangular square wave signal with an amplitude 0 and a rectangular square wave signal with an amplitude 1, or signal waveforms close to a rectangular or square wave. However, the OOK/ASK modulation has a common problem. Because there is only one channel of real signals, a spectrum function of an OOK/ASK modulation signal is conjugate symmetric about a center, namely, a frequency 0, and a power spectrum function is axisymmetric about a center, namely, a frequency 0. For example, a symbol rate of an OOK/ASK signal is R, and a main lobe bandwidth of the signal in frequency domain is 2R. Therefore, conventional OOK/ASK modulation may be referred to as a double-sideband modulation signal, that is, axisymmetric about a central, and effective spectral efficiency is only 50% (effective signal bandwidth/actual signal bandwidth=R/2R=50%).

### 7. Single-sideband OOK/ASK modulation signal

In a communication principle, a frequency domain signal of an upper half sideband or a lower half sideband that are axisymmetric of a double-sideband is eliminated while information of an OOK/ASK baseband signal is reserved. Signal spectral efficiency is 100%, and a symbol rate is doubled compared with that of a double-sideband signal.

8. In the descriptions of this application, words such as "first" and "second" are merely used for distinction and description, and shall not be understood as an indication or implication of relative importance or an indication or implication of an order.

In the descriptions of this application, "at least one (type)" means one or more (types), and "a plurality of (types)" means two or more (types). In addition, "at least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural.

In the descriptions of this application, "and/or" describes an association relationship between associated objects, and indicates that three relationships may exist. For example, A and/or B may represent the following cases: Only A exists, both A and B exist, and only B exists, where A and B may be singular or plural. In addition, "/" indicates "or". For example, a/b indicates a or b.

To describe the technical solutions in embodiments of this application more clearly, the following describes a communication method and apparatus provided in embodiments of this application in detail with reference to the accompanying drawings.

The communication method provided in this application may be applied to various communication systems. For example, embodiments of this application may be applied to an internet of things (internet of things, IoT) network, a backscattering communication system (also referred to as a passive communication system), or a semi-passive communication system. Certainly, embodiments of this application are further applicable to another possible communication system, for example, a long term evolution (long term evolution, LTE) system, an LTE frequency division duplex (frequency division duplex, FDD) system, an LTE time division duplex (time division duplex, TDD) system, a long term evolution advanced (LTE advanced, LTE-A) system, a universal mobile telecommunication system (universal mobile telecommunication system, UMTS), a worldwide interoperability for microwave access (worldwide interoperability for microwave access, WiMAX) communication system, a 5th generation (5th generation, 5G) communication system (for example, a new radio (new radio, NR) system), a next generation 6th generation (6th generation, 6G) communication system, or another next generation communication system or network.

The foregoing communication system applicable to this application is only an example for description, and the communication system applicable to this application is not limited thereto. This is uniformly described herein, and details are not described below again.

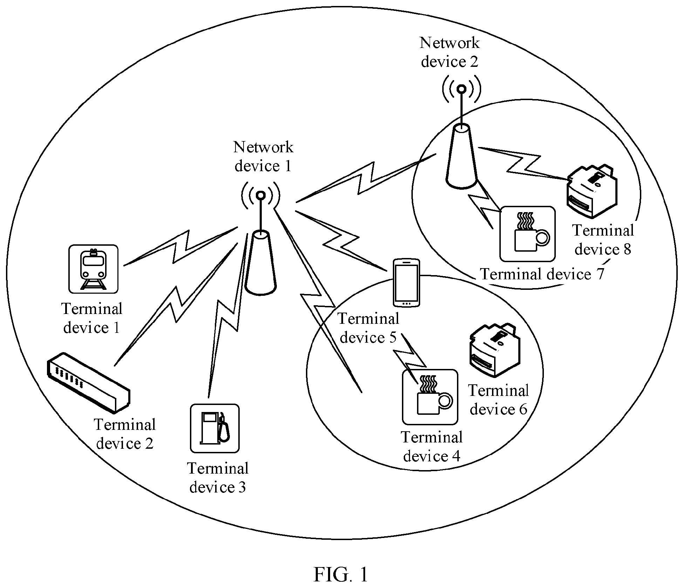

For example, FIG. 1 shows an architecture of a possible communication system to which a communication method provided in this application is applicable. A structure of the communication system may include at least one network device and at least one terminal device. For example, as shown in FIG. 1, the communication system may include two network devices: a network device 1 and a network device 2, and eight terminal devices: a terminal device 1 to a terminal device 8.

In the communication system, the network device 1 may send information to one or more terminal devices in the terminal device 1 to a terminal device 6. The network device 1 may send information to one or more terminal devices in a terminal device 7 and the terminal device 8 through the network device 2. In addition, a terminal device 4 to the terminal device 6 may also form a communication subsystem. In the communication subsystem, a terminal device 5 may send information to one or more terminal devices in the terminal device 4 and the terminal device 6. The network device 2, the terminal device 7, and the terminal device 8 may also form a communication subsystem. In the communication subsystem, the network device 2 may send information to one or more terminal devices in the terminal device 7 and the terminal device 8. It should be understood that FIG. 1 is merely a diagram. A type of the communication system, and a quantity, types, and the like of devices included in the communication system are not specifically limited in this application.

The network device may be a device having wireless receiving/sending function or a chip that may be disposed in the network device. The network device includes but is not limited to: an eNodeB (eNodeB) in LTE, a generation node B (generation node B, gNB) in NR, a radio network controller (radio network controller, RNC), a Node B (Node B, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission and reception point (transmission and reception point, TRP), a transmission point (transmission point, TP), a reader (Reader), a helper (Helper), or the like. Alternatively, the network device may be a network node, for example, a baseband unit (BBU) or a distributed unit (distributed unit, DU), that constitutes a gNB or a transmission point. When the network device is a base station, the network device may be a macro base station, a micro base station, a small cell, or a pole site. The network device may be a network device that supports receiving of data transmitted through reflection communication.

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer with a wireless transceiver function, a passive terminal device, a passive IoT terminal device, a semi-passive terminal device, a semi-passive IoT terminal device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in a smart grid, a wireless terminal in transportation safety (transportation safety), a wireless terminal in a smart city (smart city), a smart wearable device (smart glasses, a smart watch, a smart headset, and the like), a wireless terminal in smart home (smart home), a terminal device for machine type communication, and the like. The terminal device may be a terminal device that supports reflection communication, for example, a tag. Alternatively, the terminal device may be a chip, a chip module (or a chip system), or the like that can be disposed in the foregoing device. An application scenario is not limited in embodiments of this application. A terminal device with a wireless receiving/sending function and a chip that can be disposed in the terminal device are collectively referred to as the terminal device in this application.

The architecture of the communication system and the scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

Currently, in the IoT, only a fixed length of an OOK modulation symbol is used for sending a downlink signal. A length of an OOK modulation symbol of a specific granularity is fixed, and as a result, terminal devices at different downlink coverage levels can perform communication only by using one length of the OOK modulation symbol, and cannot perform downlink communication by using a symbol granularity of a shorter length of the OOK modulation symbol. Therefore, if a terminal device with a good coverage level above a specific coverage level always uses a length of an OOK modulation symbol of a fixed granularity, a high transmission rate of downlink OOK modulation information may not be achieved. Consequently, allocation of downlink transmission time domain resource is not flexible, and downlink transmission efficiency may be low. In view of this, an embodiment of this application provides a communication method, to dynamically adjust a length of a modulation symbol for downlink transmission, thereby improving downlink transmission efficiency.

It should be noted that, in the following embodiments, the communication method provided in this application is described in detail by using the terminal device and the network device as an example. It should be understood that an operation performed by the terminal device may also be implemented by a processor, a chip or a chip system, a functional module, or the like in the terminal device. An operation performed by the network device may also be implemented by a processor, a chip or a chip system, a functional module, or the like in the network device. This is not limited in this application.

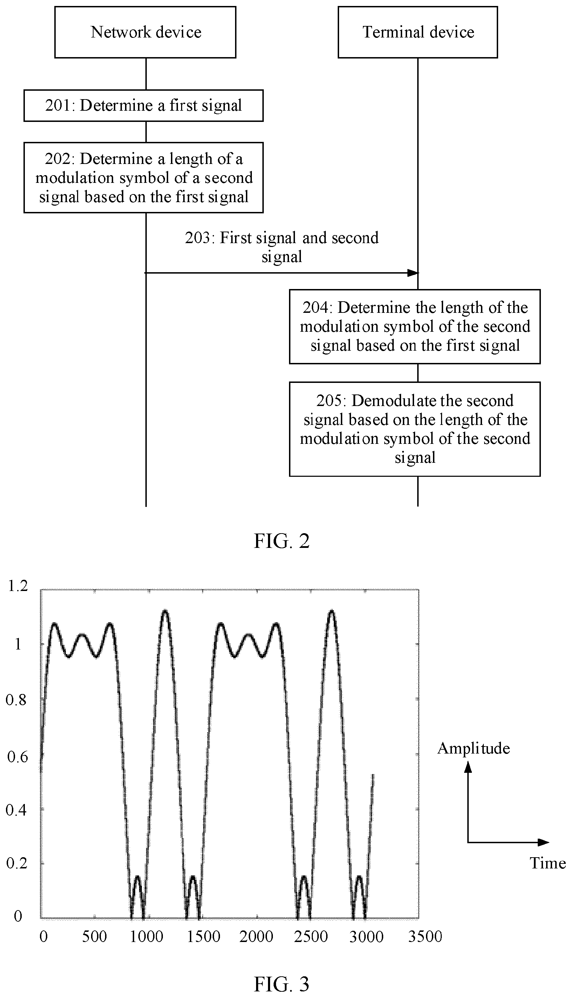

Based on the foregoing descriptions, the communication method provided in embodiments of this application is applicable to the communication system shown in FIG. 1. Refer to FIG. 2. A procedure of the method may include the following steps.

Step 201: A network device determines a first signal, where a length of a modulation symbol of the first signal may be one of a plurality of lengths of modulation symbols.

The first signal may be a preamble (preamble) signal, a signal used by the terminal device for synchronization, or a signal used by the terminal device for time or symbol synchronization, for example, a reference signal, a calibration signal, and a delimiter (delimiter) signal.

Optionally, the length of the modulation symbol may also be expressed as a symbol length, a modulation symbol rate, a symbol rate, or the like. The symbol rate or the modulation symbol rate is a reciprocal of the symbol length or the length of the modulation symbol, or the like.

The modulation symbol in this application may be an amplitude shift keying modulation symbol or a frequency shift keying modulation symbol, for example, an ASK modulation symbol, an OOK modulation symbol, an FSK modulation symbol, or a 2FSK modulation symbol. In the following example, the OOK modulation symbol is used as an example for description, but this is not intended to limit this application.

In an optional implementation, the plurality of lengths of modulation symbols may include a first length of a modulation symbol and a second length of a modulation symbol, and the second length of the modulation symbol may be twice the first length of the modulation symbol.

In an example, the first length of the modulation symbol and the second length of the modulation symbol each may be associated with at least one of the following two states. State 1: A bandwidth of a downlink signal is fixed, and a sent signal is a single-sideband modulation signal or a double-sideband modulation signal. State 2: The downlink signal is fixed to be a double-sideband modulation signal, and a bandwidth of the sent signal is a bandwidth (bandwidth, BW) 1 and a BW2, where BW1 is twice BW2. Different lengths of modulation symbols correspond to the two states. In the state 1, frequency domain resources can be saved, and modulation symbols of two lengths may use a same bandwidth. In the state 2, complexity of the network device can be reduced, no specific (specific) single-sideband modulation signal needs to be designed, and a length of a modulation symbol is adjusted by using a frequency domain bandwidth.

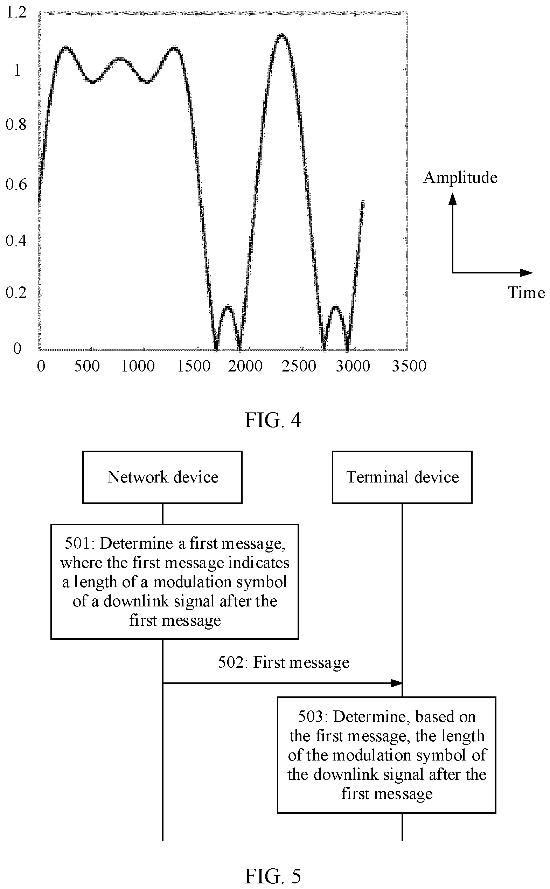

For example, the first length of the modulation symbol and the second length of the modulation symbol are a first length of an OOK modulation symbol and a second length of an OOK modulation symbol. The first length of the OOK modulation symbol is twice the second length of the OOK modulation symbol. For example, a first OOK modulation symbol in a downlink signal carries {111010111010}, and a diagram of a waveform of the first OOK modulation symbol in the downlink signal may be shown in FIG. 3; and a second OOK modulation symbol carries {111010}, and a diagram of a waveform of the second OOK modulation symbol may be shown in FIG. 4. It can be learned that a first length of the OOK symbol is twice a second length of the OOK symbol, and the downlink signal may be an orthogonal frequency division multiplexing (orthogonal frequency division multiplexing, OFDM) signal.

Optionally, the first length of the OOK modulation symbol may be equal to duration of one OFDM symbol, and the second length of the OOK modulation symbol may be equal to duration of 1/2 OFDM symbol; the first length of the OOK modulation symbol may be equal to duration of 1/2 OFDM symbol, and the second length of the OOK modulation symbol may be equal to duration of 1/4 OFDM symbol; or the first length of the OOK modulation symbol may be equal to duration of 1/6 OFDM symbol, and the second length of the OOK modulation symbol may be equal to duration of 1/12 OFDM symbol.

Correspondingly, it may also be understood that a rate of the first OOK modulation symbol is twice a rate of the second OOK modulation symbol. For example, when one downlink signal carries a plurality of first OOK modulation symbols or second modulation symbols, and a bandwidth of the downlink signal is one RB, as shown in FIG. 3 and FIG. 4, if the downlink signal is a signal corresponding to one OFDM symbol, a rate of a first OOK modulation symbol of a double-sideband modulation signal is 66.7 µs/6, and a rate of a second OOK modulation symbol of a single-sideband modulation signal is 66.7 µs/12.

In FIG. 3 and FIG. 4, a horizontal coordinate represents time, and a vertical coordinate represents an amplitude.

In an optional implementation, the plurality of lengths of modulation symbols may be predefined. For example, each of the lengths of modulation symbols may be separately defined, or may be defined with reference to an MCS table, an MCS index, or an MCS index set indication.

The following uses an example in which the first length of the OOK modulation symbol and the second length of the OOK modulation symbol are predefined for description.

In an example a1, an MCS table may be predefined, and the MCS table may indicate the first length of the OOK modulation symbol and the second length of the OOK modulation symbol. Optionally, the MCS table may further indicate status information associated with a length of an OOK modulation symbol. For example, the example a1 may be implemented in the following manner b1 and manner b2.

Manner b1: The MCS table may indicate OOK modulation (for example, a modulation order) and status information of OOK modulation (for example, spectral efficiency). For example, an MCS index set 1 may be associated with the first length of the OOK modulation symbol, and an MCS index set 2 may be associated with the second length of the OOK modulation symbol. For example, an example MCS table may be shown in Table 1.

**Table 1**

| MCS index (MCS index) | Modulation order (modulation order) | Symbol rate (namely, a symbol length) (symbol rate (kbps)) | Spectral efficiency (spectral efficiency) |
|---|---|---|---|
| MCS index set 1 | 1 | 90 | 0.5 |
| MCS index set 2 | 1 | 180 | 1.0 |

It can be learned from Table 1 that, when a subcarrier spacing of the downlink signal is 15 kHz, the first length of the OOK modulation symbol corresponds to a rate of 90 kbps of the first OOK modulation symbol, and the second length of the OOK modulation symbol corresponds to a rate of 180 kbps of the second OOK modulation symbol. When the subcarrier spacing of the downlink signal is 30 kHz, the first length of the OOK modulation symbol corresponds to a rate of 180 kbps of the first OOK modulation symbol, and the second length of the OOK modulation symbol corresponds to a rate of 360 kbps of the second OOK modulation symbol. Herein, when the subcarrier spacing is 15 kHz, the first length of the modulation symbol and the second length of the modulation symbol are not limited to 90 kbps and 180 kbps. For example, when the first length of the modulation symbol and the second length of the modulation symbol are duration of one OFDM symbol and duration of 1/2 OFDM symbol respectively, the symbol rates are 15 kbps and 30 kbps, and corresponding spectral efficiency is 0.083 and 0.167. When the subcarrier spacing is 30 kHz, the first length of the modulation symbol and the second length of the modulation symbol are not limited to 180 kbps and 360 kbps. For example, when the first length of the modulation symbol and the second length of the modulation symbol are duration of one OFDM symbol and duration of 1/2 OFDM symbol respectively, the symbol rates are 30 kbps and 60 kbps, and corresponding spectral efficiency is 0.083 and 0.167.

Manner b2: The MCS table may indicate OOK modulation and status information associated with a length of an OOK modulation symbol, such as a line code rate (line code rate), a repetition number (repetition number), and a channel coding code rate. For example, the MCS index set 1 is associated with the first length of the OOK modulation symbol and one or more of the following: a plurality of line code rates, a plurality of repetition numbers, and a plurality of channel coding code rates that are associated with the first length of the OOK modulation symbol, and the MCS index set 2 is associated with the second length of the OOK modulation symbol and one or more of the following: a plurality of line code rates, a plurality of repetition numbers, and a plurality of channel coding code rates that are associated with the second length of the OOK modulation symbol. For example, an example MCS table may be shown in Table 2.

**Table 2**

| MCS index | Modulation order | Symbol rate (kbps) | Line code rate | Repetition number |
|---|---|---|---|---|
| MCS index set 1 | 1 | 90 | 1/2 | 1 |
| | 1 | 90 | 1/2 | 4 |
| | ... | ... | ... | ... |
| | 1 | 90 | 1/2 | 32 |
| | 1 | 90 | 1/4 | 1 |
| | 1 | 90 | 1/4 | 4 |
| | ... | ... | ... | ... |
| | 1 | 90 | 1/4 | 32 |
| MCS index set 2 | 1 | 180 | 1/2 | 1 |
| | 1 | 180 | 1/2 | 4 |
| | ... | ... | ... | ... |
| | 1 | 180 | 1/2 | 32 |
| | 1 | 180 | 1/4 | 1 |
| | 1 | 180 | 1/4 | 4 |
| | ... | ... | ... | ... |
| | 1 | 180 | 1/4 | 32 |

In an example a2, two MCS tables may be predefined: a first MCS table and a second MCS table. To be specific, the first MCS table is associated with the first length of the OOK modulation symbol, and the second MCS table is associated with the second length of the OOK modulation symbol. In this case, each MCS table describes one length of an OOK modulation symbol, and may be further associated with one or more of the following: a plurality of line code rates, a plurality of repetition numbers, and a plurality of channel coding code rates that are associated with the corresponding length of the OOK modulation symbol. For example, an MCS table associated with the first length of the OOK modulation symbol may be shown in Table 3.

**Table 3**

| MCS index | Modulation order | Line code rate | Repetition number |
|---|---|---|---|
| MCS index set 1 | 1 | 1/2 | 1 |
| | 1 | 1/2 | 4 |
| | ... | ... | ... |
| | 1 | 1/2 | 32 |
| | 1 | 1/4 | 1 |
| | 1 | 1/4 | 4 |
| | ... | ... | ... |
| | 1 | 1/4 | 32 |

Different lengths of OOK modulation symbols are defined, so that a symbol rate at which the network device sends the downlink signal can be adjusted. In addition, in a joint indication manner combining a coding code rate and a repetition number, downlink transmission manners of the terminal device in different coverage can be effectively, dynamically, and flexibly adjusted, to achieve optimized transmission with a balanced downlink signal transmission rate and coverage.

In an optional implementation, the network device may determine the length of the modulation symbol of the first signal based on a coverage level of the terminal device. The coverage level of the terminal device may be denoted as CE0, CE1, CE2, ..., and CEx.

For example, the coverage level may alternatively be received power strength of a measured signal that is reported by the terminal device, for example, reference signal received power (reference signal received power, RSRP), reference signal received quality (reference signal received quality, RSRQ), or a signal to interference plus noise ratio (signal to interference plus noise ratio, SINR).

In a possible design, a method for determining, by the network device, the length of the modulation symbol of the first signal based on the coverage level of the terminal device may be as follows: When the coverage level of the terminal device is greater than a coverage level threshold (which may also be referred to as a reference coverage level), the network device determines that the length of the modulation symbol of the first signal may be a third length of a modulation symbol; or when the coverage level of the terminal device is less than or equal to the coverage level threshold, the network device determines that the length of the modulation symbol of the first signal may be a fourth length of a modulation symbol, where the fourth length of the modulation symbol is greater than the third length of the modulation symbol. In this way, an appropriate length of a modulation symbol may be selected based on the coverage level of the terminal device, so that optimized transmission with a balanced downlink signal transmission rate and coverage is achieved while transmission performance of the first signal is ensured.

Optionally, the fourth length of the modulation symbol may be the second length of the modulation symbol, and the third length of the modulation symbol may be the first length of the modulation symbol.

Optionally, the network device may send, for the terminal device at different coverage levels, preamble signals with different lengths of modulation symbols, signals used for time-frequency synchronization, broadcast signals, calibration signals, reference signals, or the like. According to the foregoing method, for a terminal device with good coverage performance, a preamble signal with a modulation symbol of a short length (that is, a high modulation symbol rate) may be sent, so that synchronization efficiency between the terminal device and the network device can be effectively improved.

Step 202: The network device determines a length of a modulation symbol of a second signal based on the first signal, where the second signal is a data signal after the first signal. The modulation symbol of the second signal may be an OOK modulation symbol. For details, refer to the foregoing descriptions of the OOK modulation symbol.

It may be understood that the length of the modulation symbol of the second signal is related to the first signal.

In an optional implementation c1, the length of the modulation symbol of the second signal is the same as the length of the modulation symbol of the first signal.

In the implementation c1, the network device determines that the length of the modulation symbol of the second signal is the same as the length of the modulation symbol of the first signal in one data transmission, that is, the network device may determine the length of the modulation symbol of the second signal based on the length of the modulation symbol of the first signal. In this manner, after determining the length of the modulation symbol of the first signal, the terminal device implicitly determines the length of the modulation symbol of the second signal, so that information overheads carried in the first signal can be effectively reduced, and complexity of detecting the first signal by the terminal device can be reduced. This is more conducive to implementation of the terminal device and reduction of overheads of the network device.

In an optional implementation c2, the first signal may indicate the length of the modulation symbol of the second signal. In this indication manner, the length of the modulation symbol of the second signal may be flexibly adjusted based on the first signal. When a communication coverage requirement is met, time resource overheads of the second signal sent by the network device may be reduced, and optimized transmission with a balanced downlink signal transmission rate and coverage is achieved.

For example, the first signal may indicate the length of the modulation symbol of the second signal in the following methods.

Method d1: The first signal may carry first indication information, and the first indication information indicates the length of the modulation symbol of the second signal.

For example, the first indication information may include a first MCS index, and the first MCS index may indicate the length of the modulation symbol of the second signal; or the first MCS index may indicate the length of the modulation symbol of the second signal and one or more of the following associated with the length of the modulation symbol of the second signal: a line code rate, a spreading code rate, or a channel coding code rate associated with the length of the modulation symbol of the second signal. In this way, the length of the modulation symbol of the second signal can be dynamically determined based on indication of the first signal. In addition, in a joint indication manner combining the coding code rate and a repetition number, downlink transmission manners of the terminal device in different coverage can be more effectively, dynamically, and flexibly adjusted, to achieve optimized transmission with a balanced downlink signal transmission rate and coverage.

Optionally, the first MCS index may be any index in Table 1 to Table 3. Refer to the foregoing descriptions.

It should be noted that the first MCS index is merely an example for description, and is not intended to limit this application. It should be understood that the first MCS index may be replaced with another name, for example, may be any name of the length of the modulation symbol of the second signal.

Method d2: The first signal may carry a first sequence, and one of the following information of the first sequence may indicate the length of the modulation symbol of the second signal: a first length of the sequence, a type of the first sequence, a mask superimposed on the first sequence, or a repetition number of a second sequence that is included in the first sequence, where the second sequence is a subsequence of the first sequence. In this way, the first signal directly indicates the modulation symbol of the second signal, so that the length of the modulation symbol of the second signal can be flexibly indicated, and a signal frame structure design for downlink transmission is simplified.

For example, there are a plurality of generation manners of the first sequence, and first sequences in different generation manners may indicate different lengths of modulation symbols of the second signal. An example in which there are two possible generation manners of the first sequence is used for description. For example, a first generation manner of the first sequence indicates that the length of the modulation symbol of the second signal is the first length of the modulation symbol, and a second generation manner indicates that the length of the modulation symbol of the second signal is the second length of the modulation symbol.

In a possible example, in a first implementation of the first sequence, the second sequence (for example, a basic sequence [S]) may be used as the first sequence, and in the second generation manner of the first sequence, N repeated basic sequences of second sequences may be used as the first sequence, for example, [S S]. In the two generation manners of the first sequence, repetition numbers of the second sequence that are included in the first sequence are different. Therefore, the length of the modulation symbol of the second signal may be indicated by using the repetition number of the second sequence that is included in the first sequence. N is an integer greater than or equal to 2.

In another possible example, in the first generation manner of the first sequence, a basic sequence [S] may be used as the first sequence, and in the second generation manner of the first sequence, N basic sequences and/or a sequence including negated basic sequences as the first sequence, for example, [S S*] or [S* S*], where * is a negated sequence, and the negated basic sequence means that 0 and 1 in the basic sequence are inverted, to obtain a sequence with 0 converted into 1 and 1 converted into 0. In the two implementations of the first sequence, lengths of the first sequence are different. Therefore, the first length of the sequence may indicate the length of the modulation symbol of the second signal.

In another possible example, the two generation manners of the first sequence may be using two different sequences as the first sequence. For example, the first generation manner of the first sequence is a sequence [S1], and the second generation manner is a sequence [S2]. In this way, the length of the modulation symbol of the second signal may be indicated by using different types of first sequences.

It should be understood that the foregoing described method in which the first signal indicates the length of the modulation symbol of the second signal is merely an example, and there may be a plurality of other generation manners. This is not limited in this application.

In an optional implementation c3, the network device may determine a length of a modulation symbol of a third signal based on the first signal, where the length of the modulation symbol of the third signal is the same as the length of the modulation symbol of the first signal, the third signal may indicate the length of the modulation symbol of the second signal, the third signal is a downlink signal after the first signal, and the third signal is a downlink signal before the second signal.

Optionally, the third signal may be a signal that carries downlink control information (downlink control information, DCI). The DCI may have a dedicated field, the dedicated field carries second indication information, and the second indication information indicates the length of the modulation symbol of the second signal. Alternatively, the third signal may be another specific signal that indicates the length of the modulation symbol of the second signal or an MCS of the second signal.

In the implementation c3, the network device sends, to the terminal device, the third signal with the length of the modulation symbol that is the same as the length of the modulation symbol of the first signal.

For example, the third signal may indicate the length of the modulation symbol of the second signal in the following method: The third signal may carry second indication information, and the length of the modulation symbol of the second signal is indicated by the second indication information.

For example, the second indication information may include a second MCS index, and the second MCS index may indicate the length of the modulation symbol of the second signal, or the second MCS index may indicate the length of the modulation symbol of the second signal and one or more of the following associated with the length of the modulation symbol of the second signal: a line code rate, a spreading code rate, or a channel coding code rate associated with the length of the modulation symbol of the second signal.

Optionally, the second MCS index may be any index in Table 1 to Table 3. Refer to the foregoing descriptions.

It should be noted that the second MCS index is merely an example for description, and is not intended to limit this application. It should be understood that the second MCS index may be replaced with another name, for example, may be any name of the length of the modulation symbol of the second signal.

According to the method in the implementation c3, for the terminal device at different coverage levels, the network device may dynamically adjust a length of a modulation symbol of a sent data signal. Because transmission time of the data signal involves different coding rates, repetition numbers, and the like, the transmission time may be long. Therefore, such dynamic adjustment manner helps adjust transmission time of one data transmission, to achieve optimized transmission with a balanced downlink signal transmission rate and coverage.

Step 203: The network device sends the first signal and the second signal to the terminal device. Correspondingly, the terminal device receives the first signal and the second signal from the network device.

Optionally, the network device may first send the first signal to the terminal device, and then send the second signal to the terminal device. Alternatively, the network device may simultaneously send the first signal and the second signal to the terminal device. This is not limited in this application.

Step 204: The terminal device determines the length of the modulation symbol of the second signal based on the first signal.

In an optional implementation, after receiving the first signal, the terminal device first determines the length of the modulation symbol of the first signal, and then demodulates the first signal based on the determined length of the modulation symbol of the first signal.

In a possible example, when the coverage level of the terminal device is greater than the coverage level threshold, after receiving the first signal, the terminal device may directly determine a boundary of the modulation symbol of the first signal and the length of the modulation symbol of the first signal based on a periodic rising edge or falling edge of the first signal.

In another possible example, when the coverage level of the terminal device is less than or equal to the coverage level threshold, the terminal device may perform signal correlation detection on the received first signal, and determine the boundary of the modulation symbol of the first signal and the length of the modulation symbol of the first signal based on a maximum correlation value of the correlation detection.

Optionally, when determining the length of the modulation symbol of the second signal based on the first signal, the terminal device may specifically determine the length of the modulation symbol based on the foregoing described implementation c1, implementation c2, or implementation c3.

For example, in the foregoing implementation c1, the terminal device determines the length of the modulation symbol of the second signal and the length of the modulation symbol of the first signal. In this implementation, determining the length of the modulation symbol of the first signal means that the terminal device determines the length of the modulation symbol of the second signal, so that the terminal device does not need to re-determine the length of the modulation symbol of the second signal, and can demodulate the data signal (namely, the second signal) based on a same length of the modulation symbol. This helps reduce complexity of demodulating the data signal by the terminal device, and can reduce design overheads and complexity of the first signal.

For another example, in the foregoing implementation c2, after receiving the first signal, the terminal device may determine the length of the modulation symbol of the second signal based on indication of the first signal. For details about how the first signal indicates the length of the modulation symbol of the second signal, refer to the foregoing descriptions. Details are not described herein again.

For another example, in the foregoing implementation c3, the terminal device may receive the third signal from the network device, to determine that the length of the modulation symbol of the third signal is the same as the length of the modulation symbol of the first signal. After demodulating the third signal based on the length of the modulation symbol of the first signal, the terminal device may determine the length of the modulation symbol of the second signal based on the indication information in the third signal. For details about how the third signal indicates the length of the modulation symbol of the second signal, refer to the foregoing descriptions. Details are not described herein again.

Step 205: The terminal device demodulates the second signal based on the length of the modulation symbol of the second signal.

In an optional implementation, the network device may send a first message to the terminal device, where the first message indicates a length of a modulation symbol of a downlink signal after the first signal.

For example, the first message may be further used to carry one of a paging message, a group paging message, a UE-specific (UE-specific) message, or a message 2 (message 2, msg2) or a message 4 (message4, msg4) in a random access procedure. Alternatively, it may be understood that the first message is one of a carrying paging message, a group paging message, a UE-specific message, or a message 2 or a message 4 in a random access procedure.

For example, the first message may be used to carry a paging message, but is not limited to signaling such as downlink common signaling selection (Select), query (Query), and repeated query (QueryRep) included in a paging message in a passive (Passive) IoT or an ambient (Ambient) IoT. The message 2 or the message 4 in the random access procedure may be, but is not limited to, downlink acknowledgment (acknowledgement character, ACK) signaling in a Passive IoT or an Ambient IoT.

Optionally, the downlink signal after the first signal may be but is not limited to one or more of a preamble signal, a reference signal, a calibration signal, a signal that carries DCI information, a data signal, and the like.

A method in which the first message indicates the length of the modulation symbol of the downlink signal after the first signal is similar to the method in which the first signal indicates the length of the modulation symbol of the second signal, and the methods may be mutually referenced, for example, an indication method with reference to an MCS table, and details are not described herein again.

According to the foregoing method, because the paging message, the message 2, the message 4, or the like already has prior information about the coverage level of the terminal device, the coverage level of the terminal device is stable in short time. Semi-static indication may be used with reference to a coverage capability of the terminal device to indicate all subsequent signals to use a same length of a modulation symbol, thereby reducing signaling overheads of frequently dynamically indicating the length of the modulation symbol.

Based on the foregoing communication method, the first signal is associated with the length of the modulation symbol of the second signal, so that the length of the modulation symbol for downlink transmission can be adjusted. The length of the modulation symbol of the downlink signal can be flexibly adjusted, to achieve optimized transmission with a balanced downlink signal transmission rate and coverage.

Based on the foregoing descriptions, an embodiment of this application further provides another communication method. Refer to FIG. 5. A procedure of the method may include the following steps.

Step 501: A network device determines a first message, where the first message indicates a length of a modulation symbol of a downlink signal after the first message.

For example, the first message may be further used to carry one of a paging message, a group paging message, a UE-specific message, or a message 2 or a message 4 in a random access procedure. Alternatively, it may be understood that the first message is one of a carrying paging message, a group paging message, a UE-specific message, or a message 2 or a message 4 in a random access procedure.

For example, the paging message may be, but is not limited to, signaling such as downlink common signaling selection, query, and repeated query of a passive IoT. The message 2 or the message 4 in the random access procedure may be but is not limited to downlink ACK signaling in a passive IoT.

Optionally, the downlink signal after the first message may be but is not limited to one or more of a preamble signal, a reference signal, a calibration signal, a signal that carries DCI information, or a data signal.

In an optional implementation, the length of the modulation symbol may be one of a plurality of lengths of modulation symbols. Specifically, for descriptions of the plurality of lengths of modulation symbols, refer to related descriptions in the embodiment shown in FIG. 2. Details are not described herein again.

A method in which the first message indicates the length of the modulation symbol of the downlink signal after the first message is similar to the method in which the first signal indicates the length of the modulation symbol of the second signal, and the methods may be mutually referenced, for example, an indication method with reference to an MCS table, and details are not described herein again.

Step 502: The network device sends the first message to a terminal device.

Step 503: The terminal device determines, based on the first message, the length of the modulation symbol of the downlink signal after the first message.

In this way, the terminal device may determine that lengths of modulation symbols of all subsequent downlink signals are the same.

According to the foregoing method, the first message may indicate all subsequent downlink signals to use a same length of a modulation symbol, so that signaling overheads for dynamically indicating the length of the modulation symbol can be reduced.

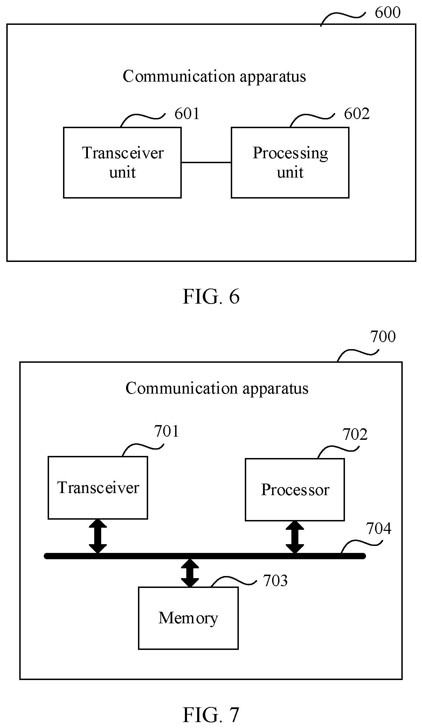

Based on the foregoing embodiments, an embodiment of this application further provides a communication apparatus. Refer to FIG. 6. A communication apparatus 600 may include a transceiver unit 601 and a processing unit 602. The transceiver unit 601 is configured to be used by the communication apparatus 600 to receive a signal (a message or data) or send information (a message or data). The processing unit 602 is configured to control and manage an action of the communication apparatus 600. The processing unit 602 may further control steps performed by the transceiver unit 601.

For example, the communication apparatus 600 may be specifically the network device in the foregoing embodiments, or a processor, a chip or a chip system, a functional module, or the like in the network device. Alternatively, the communication apparatus 600 may be specifically the terminal device in the foregoing embodiments, or a processor, a chip or a chip system, a functional module, or the like in the terminal device.

In an embodiment, when the communication apparatus 600 is configured to implement the function of the network device in the embodiment in FIG. 2, the following may be included: The processing unit 602 may be configured to: determine a first signal, and determine a length of a modulation symbol of a second signal based on the first signal, where a length of a modulation symbol of the first signal may be one of a plurality of lengths of modulation symbols, the first signal is a preamble signal or a signal used by the terminal device for synchronization, the second signal is a data signal after the first signal, and the modulation symbol of the second signal is an amplitude shift keying modulation symbol or a frequency shift keying modulation symbol; and the transceiver unit 601 may be configured to send the first signal and the second signal to the terminal device.

In an optional implementation, the plurality of lengths of modulation symbols may include a first length of a modulation symbol and a second length of a modulation symbol, and the second length of the modulation symbol may be twice the first length of the modulation symbol.

For example, the processing unit 602 may be further configured to: before the transceiver unit 601 sends the first signal to the terminal device, determine the length of the modulation symbol of the first signal based on a coverage level of the terminal device.

Optionally, when determining the length of the modulation symbol of the first signal based on the coverage level of the terminal device, the processing unit 602 may be configured to: when the coverage level of the terminal device is greater than a coverage level threshold, determine that the length of the modulation symbol of the first signal is a third length of a modulation symbol; or when the coverage level of the terminal device is less than or equal to the coverage level threshold, determine that the length of the modulation symbol of the first signal is a fourth length of a modulation symbol, where the fourth length of the modulation symbol is greater than the third length of the modulation symbol.

In an example, the length of the modulation symbol of the second signal may be the same as the length of the modulation symbol of the first signal.

In another example, the first signal may indicate the length of the modulation symbol of the second signal.

In a possible manner, that the first signal indicates the length of the modulation symbol of the second signal may include: The first signal may carry first indication information, the first indication information includes a first MCS index, and the first MCS index indicates the length of the modulation symbol of the second signal, or the first MCS index indicates the length of the modulation symbol of the second signal and one or more of the following: a line code rate, a spreading code rate, or a channel coding code rate associated with the length of the modulation symbol of the second signal.

In another possible manner, that the first signal indicates the length of the modulation symbol of the second signal may include: The first signal may carry a first sequence, and one of the following information of the first sequence indicates the length of the modulation symbol of the second signal: a first length of the sequence, a type of the first sequence, a mask superimposed on the first sequence, or a repetition number of a second sequence that is included in the first sequence, where the second sequence is a subsequence of the first sequence.

In another example, when determining the length of the modulation symbol of the second signal based on the first signal, the processing unit 602 may be specifically configured to determine a length of a modulation symbol of a third signal based on the first signal, where the length of the modulation symbol of the third signal may be the same as the length of the modulation symbol of the first signal, the third signal may indicate the length of the modulation symbol of the second signal, the third signal is a downlink signal after the first signal, and the third signal is a downlink signal before the second signal. The third signal may be a signal that carries downlink control information DCI, or may be a specific signal that indicates the length of the modulation symbol of the second signal, or may be a specific signal that indicates an MCS of the second signal. The transceiver unit 601 may be further configured to send the third signal to the terminal device.

Optionally, that the third signal indicates the length of the modulation symbol of the second signal may include: The third signal carries second indication information, the second indication information includes a second MCS index, and the second MCS index indicates the length of the modulation symbol of the second signal, or the second MCS index indicates the length of the modulation symbol of the second signal and one or more of the following: a line code rate, a spreading code rate, or a channel coding code rate associated with the length of the modulation symbol of the second signal.

In a possible example, the transceiver unit 601 may be further configured to send a first message to the terminal device, where the first message may indicate a length of a modulation symbol of a downlink signal after the first signal, and the first message is further used to carry one of a paging message, a group paging message, or a message 2 or a message 4 in a random access procedure.

In an embodiment, when the communication apparatus 600 is configured to implement the function of the terminal device in the embodiment in FIG. 2, the following may be included: The transceiver unit 601 may be configured to receive a first signal and a second signal from a network device, where a length of a modulation symbol of the first signal is one of a plurality of lengths of modulation symbols, and the first signal is a preamble signal or a signal used by the terminal device for synchronization; and the processing unit 602 may be configured to: determine a length of a modulation symbol of the second signal based on the first signal, and demodulate the second signal based on the length of the modulation symbol of the second signal. The second signal is a data signal after the first signal, and the modulation symbol of the second signal is an amplitude shift keying modulation symbol or a frequency shift keying modulation symbol.

Optionally, the plurality of lengths of modulation symbols may include a first length of a modulation symbol and a second length of a modulation symbol, and the second length of the modulation symbol may be twice the first length of the modulation symbol.

In an example, the length of the modulation symbol of the second signal may be the same as the length of the modulation symbol of the first signal.

In another example, the first signal may indicate the length of the modulation symbol of the second signal.

In a possible manner, that the first signal indicates the length of the modulation symbol of the second signal may include: The first signal may carry first indication information, the first indication information includes a first MCS index, and the first MCS index indicates the length of the modulation symbol of the second signal, or the first MCS index indicates the length of the modulation symbol of the second signal and one or more of the following: a line code rate, a spreading code rate, or a channel coding code rate associated with the length of the modulation symbol of the second signal.

In another possible manner, that the first signal indicates the length of the modulation symbol of the second signal may include: The first signal may carry a first sequence, and one of the following information of the first sequence indicates the length of the modulation symbol of the second signal: a first length of the sequence, a type of the first sequence, a mask superimposed on the first sequence, or a repetition number of a second sequence that is included in the first sequence, where the second sequence is a subsequence of the first sequence.

In still another example, when determining the length of the modulation symbol of the second signal based on the first signal, the processing unit 602 may be specifically configured to control, based on the first signal, the transceiver unit 601 to receive a third signal from the network device, where a length of a modulation symbol of the third signal may be the same as the length of the modulation symbol of the first signal, the third signal may indicate the length of the modulation symbol of the second signal, the third signal is a downlink signal after the first signal, and the third signal is a downlink signal before the second signal. The third signal is a signal that carries downlink control information DCI, or the third signal is a specific signal that indicates the length of the modulation symbol of the second signal, or the third signal is a specific signal that indicates an MCS of the second signal.

Optionally, that the third signal indicates the length of the modulation symbol of the second signal may include: The third signal may carry second indication information, the second indication information includes a second MCS index, and the second MCS index indicates the length of the modulation symbol of the second signal, or the second MCS index indicates the length of the modulation symbol of the second signal and one or more of the following: a line code rate, a spreading code rate, or a channel coding code rate associated with the length of the modulation symbol of the second signal.

In a possible example, the transceiver unit 601 may be further configured to receive a first message from the network device, where the first message indicates a length of a modulation symbol of a downlink signal after the first signal, and the first message is further used to carry one of a paging message, a group paging message, or a message 2 or a message 4 in a random access procedure.

In an embodiment, when the communication apparatus 600 is configured to implement the function of the network device in the embodiment in FIG. 4, the following may be included: The processing unit 602 may be configured to determine a first message, where the first message may indicate a length of a modulation symbol of a downlink signal after the first message. The first message may be further used to carry one of a paging message, a group paging message, a UE-specific message, or a message 2 or a message 4 in a random access procedure. The transceiver unit 601 may be configured to send the first message to a terminal device.

In an embodiment, when the communication apparatus 600 is configured to implement the function of the terminal device in the embodiment in FIG. 4, the following may be included: The transceiver unit 601 may be configured to receive a first message from a network device, where the first message may indicate a length of a modulation symbol of a downlink signal after the first message. The first message may be further used to carry one of a paging message, a group paging message, a UE-specific message, or a message 2 or a message 4 in a random access procedure. The processing unit 602 may be configured to determine, based on the first message, the length of the modulation symbol of the downlink signal after the first message.

It should be noted that, in embodiments of this application, division into the units is an example, and is merely a logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. Refer to FIG. 7. A communication apparatus 700 may include a transceiver 701 and a processor 702. Optionally, the communication apparatus 700 may further include a memory 703. The memory 703 may be disposed inside the communication apparatus 700, or may be disposed outside the communication apparatus 700. The processor 702 may control the transceiver 701 to receive and send information, a message, data, or the like.

Specifically, the processor 702 may be a central processing unit (central processing unit, CPU), a network processor (network processor, NP), or a combination of a CPU and an NP. The processor 702 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The transceiver 701, the processor 702, and the memory 703 are connected to each other. Optionally, the transceiver 701, the processor 702, and the memory 703 are connected to each other through a bus 704. The bus 704 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used for representation in FIG. 7, but this does not mean that there is only one bus or only one type of bus.

In an optional implementation, the memory 703 is configured to store a program and the like. Specifically, the program may include program code, and the program code includes computer operation instructions. The memory 703 may include a RAM, and may further include a non-volatile memory (non-volatile memory), for example, one or more disk memories. The processor 702 executes an application stored in the memory 703 to implement the foregoing functions, so as to implement the functions of the communication apparatus 700.

For example, the communication apparatus 700 may be the network device in the foregoing embodiments, or may be the terminal device in the foregoing embodiments.

In an embodiment, when the communication apparatus 700 implements the functions of the network device in the embodiment shown in FIG. 2 or FIG. 5, the transceiver 701 may implement a receiving/sending operation performed by the network device in the embodiment shown in FIG. 2 or FIG. 5, and the processor 702 may implement another operation other than the receiving/sending operation performed by the network device in the embodiment shown in FIG. 2 or FIG. 5. For specific related descriptions, refer to the related descriptions in the embodiment shown in FIG. 2 or FIG. 5. Details are not described herein again.

In an embodiment, when the communication apparatus 700 implements the functions of the terminal device in the embodiment shown in FIG. 2 or FIG. 5, the transceiver 701 may implement a receiving/sending operation performed by the terminal device in the embodiment shown in FIG. 2 or FIG. 5, and the processor 702 may implement another operation other than the receiving/sending operation performed by the terminal device in the embodiment shown in FIG. 2 or FIG. 5. For specific related descriptions, refer to the related descriptions in the embodiment shown in FIG. 2 or FIG. 5. Details are not described herein again.

Based on the foregoing embodiments, an embodiment of this application provides a communication system. The communication system may include the terminal device, the network device, and the like in the foregoing embodiments.

An embodiment of this application further provides a computer-readable storage medium. The computer-readable storage medium is configured to store a computer program. When the computer program is executed by a computer, the computer may implement the communication method provided in the method embodiment shown in FIG. 2 or FIG. 5.

An embodiment of this application further provides a computer program product. The computer program product is configured to store a computer program. When the computer program is executed by a computer, the computer may implement the communication method provided in the method embodiment shown in FIG. 2 or FIG. 5.

An embodiment of this application further provides a chip, including a processor. The processor is coupled to a memory, and is configured to invoke a program in the memory, so that the chip implements the communication method provided in the method embodiment shown in FIG. 2 or FIG. 5.

An embodiment of this application further provides a chip. The chip is coupled to a memory, and the chip is configured to implement the communication method provided in the method embodiment shown in FIG. 2 or FIG. 5.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can guide the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, and computer-implemented processing is generated. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
determining, by a network device, a first signal, wherein a length of a modulation symbol of the first signal is one of a plurality of lengths of modulation symbols, and the first signal is a preamble signal or a signal used by a terminal device for synchronization;
determining, by the network device, a length of a modulation symbol of a second signal based on the first signal, wherein the second signal is a data signal after the first signal, and the modulation symbol of the second signal is an amplitude shift keying modulation symbol or a frequency shift keying modulation symbol; and
sending, by the network device, the first signal and the second signal to the terminal device.

2. The method according to claim 1, wherein the plurality of lengths of modulation symbols comprise a first length of a modulation symbol and a second length of a modulation symbol, and the second length of the modulation symbol is twice the first length of the modulation symbol.

3. The method according to claim 1 or 2, wherein before the sending, by the network device, the first signal to the terminal device, the method further comprises:
determining, by the network device, the length of the modulation symbol of the first signal based on a coverage level of the terminal device.

4. The method according to claim 3, wherein the determining, by the network device, the length of the modulation symbol of the first signal based on a coverage level of the terminal device comprises:
when the coverage level of the terminal device is greater than a coverage level threshold, determining, by the network device, that the length of the modulation symbol of the first signal is a third length of a modulation symbol; or
when the coverage level of the terminal device is less than or equal to the coverage level threshold, determining, by the network device, that the length of the modulation symbol of the first signal is a fourth length of a modulation symbol, wherein
the fourth length of the modulation symbol is greater than the third length of the modulation symbol.

5. The method according to any one of claims 1 to 4, wherein the length of the modulation symbol of the second signal is the same as the length of the modulation symbol of the first signal.

6. The method according to any one of claims 1 to 4, wherein the first signal indicates the length of the modulation symbol of the second signal.

7. The method according to claim 6, wherein that the first signal indicates the length of the modulation symbol of the second signal comprises:
the first signal carries first indication information, the first indication information comprises a first MCS index, and the first MCS index indicates the length of the modulation symbol of the second signal, or the first MCS index indicates the length of the modulation symbol of the second signal and one or more of the following: a line code rate, a spreading code rate, or a channel coding code rate associated with the length of the modulation symbol of the second signal.

8. The method according to claim 6, wherein that the first signal indicates the length of the modulation symbol of the second signal comprises:
the first signal carries a first sequence, and one of the following information of the first sequence indicates the length of the modulation symbol of the second signal: a first length of the sequence, a type of the first sequence, a mask superimposed on the first sequence, or a repetition number of a second sequence that is comprised in the first sequence, wherein the second sequence is a subsequence of the first sequence.

9. The method according to any one of claims 1 to 4, wherein the determining, by the network device, a length of a modulation symbol of a second signal based on the first signal comprises:
determining, by the network device, a length of a modulation symbol of a third signal based on the first signal, wherein the length of the modulation symbol of the third signal is the same as the length of the modulation symbol of the first signal, and the third signal indicates the length of the modulation symbol of the second signal; and
the third signal is a downlink signal after the first signal, the third signal is a downlink signal before the second signal, and the third signal is a signal that carries downlink control information DCI; and
the method further comprises:
sending, by the network device, the third signal to the terminal device.

10. The method according to claim 9, wherein that the third signal indicates the length of the modulation symbol of the second signal comprises:
the third signal carries second indication information, the second indication information comprises a second MCS index, and the second MCS index indicates the length of the modulation symbol of the second signal, or the second MCS index indicates the length of the modulation symbol of the second signal and one or more of the following: a line code rate, a spreading code rate, or a channel coding code rate associated with the length of the modulation symbol of the second signal.

11. The method according to any one of claims 1 to 10, wherein the method further comprises:
sending, by the network device, a first message to the terminal device, wherein the first message indicates a length of a modulation symbol of a downlink signal after the first signal, and the first message is further used to carry one of a paging message, a group paging message, or a message 2 or a message 4 in a random access procedure.

12. A communication method, comprising:
receiving, by a terminal device, a first signal and a second signal from a network device, wherein a length of a modulation symbol of the first signal is one of a plurality of lengths of modulation symbols, and the first signal is a preamble signal or a signal used by the terminal device for synchronization;
determining, by the terminal device, a length of a modulation symbol of the second signal based on the first signal, wherein the second signal is a data signal after the first signal, and the modulation symbol of the second signal is an amplitude shift keying modulation symbol or a frequency shift keying modulation symbol; and
demodulating, by the terminal device, the second signal based on the length of the modulation symbol of the second signal.

13. The method according to claim 12, wherein the plurality of lengths of modulation symbols comprise a first length of a modulation symbol and a second length of a modulation symbol, and the second length of the modulation symbol is twice the first length of the modulation symbol.

14. The method according to claim 12 or 13, wherein the length of the modulation symbol of the second signal is the same as the length of the modulation symbol of the first signal.

15. The method according to claim 12 or 13, wherein the first signal indicates the length of the modulation symbol of the second signal.

16. The method according to claim 15, wherein that the first signal indicates the length of the modulation symbol of the second signal comprises:
the first signal carries first indication information, the first indication information comprises a first MCS index, and the first MCS index indicates the length of the modulation symbol of the second signal, or the first MCS index indicates the length of the modulation symbol of the second signal and one or more of the following: a line code rate, a spreading code rate, or a channel coding code rate associated with the length of the modulation symbol of the second signal.

17. The method according to claim 15, wherein that the first signal indicates the length of the modulation symbol of the second signal comprises:
the first signal carries a first sequence, and one of the following information of the first sequence indicates the length of the modulation symbol of the second signal: a first length of the sequence, a type of the first sequence, a mask superimposed on the first sequence, or a repetition number of a second sequence that is comprised in the first sequence, wherein the second sequence is a subsequence of the first sequence.

18. The method according to claim 12 or 13, wherein the determining, by the terminal device, a length of a modulation symbol of the second signal based on the first signal comprises:
receiving, by the terminal device, a third signal from the network device based on the first signal, wherein a length of a modulation symbol of the third signal is the same as the length of the modulation symbol of the first signal, and the third signal indicates the length of the modulation symbol of the second signal; and
the third signal is a downlink signal after the first signal, the third signal is a downlink signal before the second signal, and the third signal is a signal that carries downlink control information DCI.

19. The method according to claim 18, wherein that the third signal indicates the length of the modulation symbol of the second signal comprises:
the third signal carries second indication information, the second indication information comprises a second MCS index, and the second MCS index indicates the length of the modulation symbol of the second signal, or the second MCS index indicates the length of the modulation symbol of the second signal and one or more of the following: a line code rate, a spreading code rate, or a channel coding code rate associated with the length of the modulation symbol of the second signal.

20. The method according to any one of claims 12 to 19, wherein the method further comprises:
receiving, by the terminal device, a first message from the network device, wherein the first message indicates a length of a modulation symbol of a downlink signal after the first signal, and the first message is further used to carry one of a paging message, a group paging message, or a message 2 or a message 4 in a random access procedure.

21. A communication apparatus, comprising a memory, a processor, and a transceiver, wherein
the memory is configured to store computer instructions;
the transceiver is configured to receive and send information; and
the processor is coupled to the memory, and is configured to invoke the computer instructions in the memory, to perform the method according to any one of claims 1 to 11 through the transceiver.

22. A communication apparatus, comprising a memory, a processor, and a transceiver, wherein
the memory is configured to store computer instructions;
the transceiver is configured to receive and send information; and
the processor is coupled to the memory, and is configured to invoke the computer instructions in the memory, to perform the method according to any one of claims 12 to 20 through the transceiver.

23. A computer-readable storage medium, wherein the computer-readable storage medium stores computer-executable instructions, and when the computer-executable instructions are invoked by the computer, the method according to any one of claims 1 to 11 is performed, or the method according to any one of claims 12 to 20 is performed.

24. A computer program product, comprising instructions, wherein when the instructions are run on a computer, the method according to any one of claims 1 to 11 is performed, or the method according to any one of claims 12 to 20 is performed.

25. A chip, wherein the chip is coupled to a memory, and is configured to: read and execute program instructions stored in the memory, to implement the method according to any one of claims 1 to 11, or implement the method according to any one of claims 12 to 20.
